(19) Europäisches Patentamt

European Patent Office

Office européen des brevets

(11) EP 0 867 409 A1

(12) **DEMANDE DE BREVET EUROPEEN**

(43) Date de publication:
30.09.1998 Bulletin 1998/40

(51) Int Cl.⁶: **C02F 1/46**, C25C 1/00

(21) Numéro de dépôt: 98500043.9

(22) Date de dépôt: 13.02.1998

(84) Etats contractants désignés:
AT BE CH DE DK ES FI FR GB GR IE IT LI LU MC NL PT SE
Etats d'extension désignés:
AL LT LV MK RO SI

(30) Priorité: 19.02.1997 ES 9700345

(71) Demandeur: Fundacion Inasmet
20009 San Sebastian (Guipuzcoa) (ES)

(72) Inventeurs:
• Solozabal Echevarria, Rodolfo
20009 San Sabastian (Guipuzcoa) (ES)

• Ipinazar Alonso, Enrique
20009 San Sabastian (Guipuzcoa) (ES)
• Aguirre Mugica, Patricio
20009 San Sabastian (Guipuzcoa) (ES)
• Mugica Iraola, Juan Carlos
20009 San Sabastian (Guipuzcoa) (ES)

(74) Mandataire: Urizar Barandiaran, Miguel Angel
Calle Licenciado Poza, 56
48013 Bilbao (Vizcaya) (ES)

(54) **Processus de récupération de métaux à partir de boues provenant de traitements électrolytiques de surface**

(57) Processus de récupération de métaux à partir de boues provenant de traitements électrolytiques de surface, se composant des phases ci-après :

a) on part de boues neutralisées provenant spécifiquement de traitements lors lesquels on a utilisé le/les métal/aux (Me) que l'on souhaite récupérer et contenant du/des sel(s) du neutralisateur employé;
b) on désionise lesdites boues des anions et cations portés par le/lesdits sels;
c) on acidifie le milieu jusqu'à parvenir à une dissolution acide de pH se situant entre 3 et 6.
d) dans une cuve à électrolyse, on électrolyse la dissolution à l'aide d'une cathode volumique de laquelle on obtient le/les métal/aux (Me) que l'on désirait récupérer.

Applicable dans la récupération des métaux.

## Description

Les traitements électrolytiques de surface donnent lieu à des dissolutions diluées de sels de métaux tels que, par exemple, $Cl_2$, Ni, $SO_4$ Ni, $Cl_2Cu$, $SO_4$ Sn etc. qui dépendent des anions acides utilisés et des métaux lourds correspondants comme le Ni, Cu, Sn, etc.

Lesdites dissolutions font référence à un ou plusieurs métaux et sont hautement polluantes, de là qu'il y a lieu de les neutraliser, par exemple, avec de l'hydroxyde de sodium Na OH, ce qui entraîne la formation d'une boue, jusqu'à ce jour sans utilité et dont il fallait se défaire.

Le demandeur considère qu'il s'agit là d'un gaspillage dans la mesure où on laisse se perdre, de la sorte, des quantités considérables de métaux en dehors d'une atteinte à l'environnement, ce qui l'a conduit à développer un processus en vue de leur récupération.

Désormais, normalement les boues des différents processus de traitement électrolytique de surface d'une même usine sont mélangées entre elles, en vue de leur traitement de neutralisation.

Pendant le processus objet de l'invention, on commence par isoler les boues d'un processus concret, fondamentalement pour ce qui concerne le/les métal/aux que l'on souhaite récupérer, par exemple les boues contenant du nickel (Ni), et que l'on ne mélange pas de manière indiscriminée avec celles provenant d'autres processus concernant un autre métal, étant donné que le processus objet de l'invention a précisément pour prétention de récupérer un métal déterminé ou un mélange de métaux déterminés.

La présente invention préconise un processus de récupération de métaux à partir de boues provenant de traitements électrolytiques de surface, qui se caractérise par le fait qu'il se compose des phases ci-après :

a) on part de boues neutralisées provenant spécifiquement de traitements ayant utilisé le/les métal/aux (Me) que l'on souhaite récupérer et qui contiennent un/des sel(s) du neutralisateur employé;
b) on désionise lesdites boues des anions et cations portés par lesdits sels;
c) on acidifie le milieu jusqu'à parvenir à une dissolution acide au pH se situant entre 3 et 6

$$3 \leq pH \leq 6$$

d) on dissout les métaux jugés dignes d'intérêt;
e) on électrolyse avec une cathode volumique; et
f) de la cathode on extrait le/les métal/aux (Me) que l'on souhaitait récupérer.

L'invention se caractérise également par le fait que lors de l'électrolyse, l'élément généré sur l'anode est renvoyé à la phase antérieure d'acidification.

Elle se caractérise également par le fait que pour désioniser les boues, on procède manière continue en ajoutant de l'eau et en filtrant l'ensemble, ce qui entraîne l'eau, le/les sel(s) porteur(s) des anions et cations.

Elle se caractérise également par le fait qu'avec le soluté qui en résulte après filtrage on obtient à nouveau une suspension.

Elle se caractérise également par le fait que la cathode est une cathode en graphite.

Afin de permettre de mieux saisir l'objet de la présent invention, on représente sur les plans une forme préférentielle de réalisation pratique, susceptible de modifications accessoires qui n'en faussent nullement le fondement.

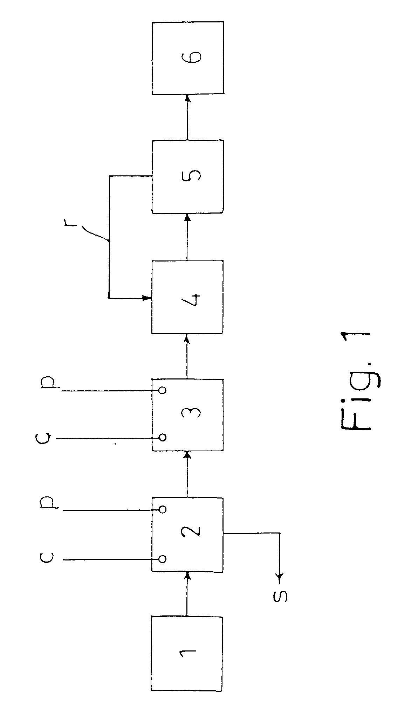

La figure 1 est un diagramme de blocs du processus objet de l'invention.

On décrit ci-après un exemple de réalisation pratique, non limitative, de la présente invention.

Sur une installation à revêtement électrolytique métallique, on dispose habituellement d'un ensemble de cuves indépendantes dédiées chacune à un revêtement spécifique d'un ou de deux métaux (Me) normalement, par exemple, Ni, Sn, Zn, Cu, etc.

De chaque cuve provient une dissolution de rejet dite de rinçage qui contient le sel ou les sels métalliques (anion + Me) correspondant(s)

Habituellement, les dissolutions de rejet des différentes cuves contenant différents métaux (Me) se mélangent de manière indiscriminée et sont traitées en vue de leur neutralisation.

Lors du processus objet de l'invention, les dissolutions de rejet de chaque métal, au lieu de se mélanger, sont traitées de manière indépendante. Dans ce cas, on traitera le métal (nickel (Ni) ).

Boue (1).

Dans cette réalisation pratique, on suppose que le métal est du nickel (Ni) et que la dissolution de rejet contient du chlorure de nickel Cl2 Ni et/ou SO4 Ni (sel/s de métal/aux que l'on désire récupérer, dans ce cas Ni) et qui se neutralise avec de l'hydroxyde de sodium Na OH :

$$Cl_2\ Ni + 2\ Na\ OH \Leftrightarrow Ni\ (OH)_2 + 2Cl\ Na\ (sel)$$

entraînant la formation d'une boue (1) qui contient un sel de sodium dissous (dans ce cas, il s'agit d'un chlorure, mais ce pourrait être un sulfate, etc.).

Désionisation d'anions (2).

Le demandeur considère qu'il y a lieu d'éliminer l'anion chlorure, sulfate, etc. de ladite boue (1), ce qui nous amène, dans ce cas concret, à rajouter de l'eau ($H_2O$), qui dissout le sel correspondant, au moyen d'un filtrage, l'eau entraînant le sel (S), pour ne laisser que le soluté avec l'hydroxyde de nickel (Ni $(OH)_2$.

## Nouvelle suspension (3).

Au solide obtenu, on ajoute à nouveau de l'eau et l'on agite jusqu'à obtenir une suspension.

## Nouvelle dissolution (4).

A ladite suspension on ajoute une solution acide de manière contrôlée afin d'obtenir que son pH soit :
$3 \leq pH \leq 6$ et de manière préférentielle

$$3'5 \leq pH \leq 4'5$$

## Dépôt (5)

La dissolution acide (4) est introduite à partir d'une cuve électrolytique pourvue d'une cathode volumique, en graphite par exemple, et avec une dissolution de sel (s) du métal agent de tout le processus (dans ce cas le nickel Ni), par exemple du sulfate de nickel : $SO_4Ni$ et $Cl_2Ni$.

Sur l'anode s'oxyde l'anion correspondant et le dissolvant qui régénère (T) le milieu acide en provoquant la nouvelle dissolution (4). Sur la cathode volumique se dépose le métal (dans ce cas Ni).

## Lingot (6)

On fait fondre la cathode, ce qui permet d'obtenir un lingot de métal pur au minimum à 95%.

Comme a indiqué précédemment, le métal peut être Ni, Cu, Sn, Zn, etc., autrement dit n'importe quel métal lourd ou un mélange d'entre eux, qui normalement n'est pas supérieur à deux et que l'on utilise dans les processus électrolytiques.

Le processus total à travers ses différentes phases est exothermique.

Les installations habituelles se composent habituellement de composants plastiques qui se détériorent sous l'effet de la chaleur, de là qu'il convient de contrôler la température des différentes phases du processus au moyen de régulateurs de température ( C) et d'éviter de dépasser les 50°.

On dispose, par ailleurs, de contrôleurs (P) du pH.

## Revendications

1. Processus de récupération de métaux à partir de boues provenant de traitements électrolytiques de surfaces, se caractérisant par le fait qu'il se compose des phases ci-après :

a) on part de boues neutralisées provenant spécifiquement de traitements ayant utilisé le/les métal/aux (Me) que l'on désire récupérer et qui contiennent du/des sel(s) du neutralisateur employé;

b) on désionise lesdites boues des anions et cations portés par ces sel(s);

c) on acidifie le milieu jusqu'à parvenir à une dissolution acide de pH entre 3 et 6.

$$3 \leq pH \leq 6$$

d) dans une cuve à électrolyse, on électrolyse la dissolution avec une cathode volumique; et

e) de la cathode, on obtient le/les métal/aux (Me) que l'on désirait récupérer.

2. rocessus de récupération de métaux à partir de boues provenant de traitements électrolytiques de surface, selon revendication antérieure, se caractérisant par le fait que dans la cuve à électrolyse sont dissous des composés du/des métal/aux que l'on désire récupérer.

3. Processus de récupération de métaux à partir de boues provenant de traitements électrolytiques de surface, selon les revendications antérieures, se caractérisant par le fait que l'élément généré dans l'anode, lors de l'électrolyse, est renvoyé à la phase antérieure d'acidification.

4. Processus de récupération de métaux à partir de boues provenant de traitements électrolytiques de surfaces, selon revendications antérieures, se caractérisant par le fait que pour désioniser les boues on procède de manière continue à rajouter de l'eau et à filtrer l'ensemble, en dissolvant et/ou entraînant l'eau au(x) sel(s) porteur(s) des anions.

5. Processus de récupération de métaux à partir de boues provenant de traitements électrolytiques de surfaces, selon revendication 4, se caractérisant par le fait qu'au moyen du soluté résultant du filtrage on obtient à nouveau une suspension.

6. Processus de récupération de métaux à partir de boues issues de traitements électrolytiques de surfaces, selon revendication 1, se caractérisant par le fait que la cathode est en graphite.

7. Processus de récupération de métaux à partir de boues provenant de traitements électrolytiques de surface, selon revendication 1, se caractérisant par le fait que le pH de la dissolution acide se situe entre 3'5 et 4'5

$$3'5 \leq pH \leq 4'5$$

Fig. 1

**Office européen des brevets**

# RAPPORT DE RECHERCHE EUROPEENNE

Numéro de la demande

EP 98 50 0043

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| A | NL 9 000 305 A (ESMIL WATER SYSTEMS B.V.) * page 6; revendications 1,4 * | 1 | C02F1/46 C25C1/00 |
| A | EP 0 534 029 A (ELECTRICITE DE FRANCE) * colonne 1, ligne 1 - ligne 43 * | 1 | |
| A | DATABASE WPI Week 8040 Derwent Publications Ltd., London, GB; AN 80-70277 XP002062753 & JP 55 107 742 A (MIURA ENG INT) , 19 août 1980 * abrégé * | 1 | |

| | | | DOMAINES TECHNIQUES RECHERCHES (Int.Cl.6) |
|---|---|---|---|
| | | | C02F C25C |

Le présent rapport a été établi pour toutes les revendications

| Lieu de la recherche | Date d'achèvement de la recherche | Examinateur |
|---|---|---|
| LA HAYE | 21 avril 1998 | Groseiller, P |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03 82 (P04C02)